# EUROPEAN PATENT SPECIFICATION

(11) **EP 1 844 379 B1**
(45) Date of publication and mention of the grant of the patent: **03.11.2010**
(21) Application number: 05855806.5
(22) Date of filing: 29.12.2005
(51) Int. Cl.: F28F 27/02

(54) **PULSE WIDTH MODULATION OR VARIABLE SPEED CONTROL OF FANS IN REFRIGERANT SYSTEMS**
IMPULSBREITENMODULATION ODER VARIABLE DREHZAHLREGELUNG FÜR LÜFTER IN KÜHLMITTELSYSTEMEN
VENTILATEURS COMMANDES PAR MODULATION D'IMPULSIONS EN LARGEUR OU PAR VITESSE VARIABLE DANS DES SYSTEMES DE REFRIGERANT

(30) Priority: 02.02.2005 US 649427 P
(43) Date of publication of application: 17.10.2007
(73) Proprietor: CARRIER CORPORATION, Farmington, Connecticut 06034 (US)
(72) Inventor: LIFSON, Alexander, Manlius, New York 13104 (US); TARAS, Michael, F., Fayetteville, New York 13066 (US)
(74) Representative: Booth, Catherine Louise
(86) International application number: PCT/US2005/047307
(87) International publication number: WO 2006/083441

(56) References cited:
- JP-A- 09 229 536
- JP-A- 2004 072 977
- US-A- 5 269 367
- US-A- 5 813 249
- US-A- 6 037 567

## Description

### Background of the Invention

This invention relates generally to heat exchangers of air conditioning, heat pump and refrigeration systems and, more particularly, to parallel flow (minichannel or microchannel) evaporators thereof.

A definition of a so-called parallel flow heat exchanger is widely used in the air conditioning and refrigeration industry and designates a heat exchanger with a plurality of parallel passages or channels typically of flattened or round cross-section, among which refrigerant is distributed and flown in the orientation generally substantially perpendicular to the refrigerant flow direction in the inlet and outlet manifolds. This definition is well adapted within the technical community and will be used throughout the text.

Refrigerant maldistribution in refrigerant system heat exchangers, and evaporators in particular, is a well-known area of concern. Since the evaporators are susceptible the most to the refrigerant maldistribution, the evaporators will be predominantly referenced throughout the text, although many facts will be relevant, for instance to the condensers as well. Refrigerant maldistribution causes significant evaporator and overall system performance degradation over a wide range of operating conditions. Maldistribution of refrigerant may occur due to differences in flow impedances within evaporator channels, non-uniform airflow distribution over external heat transfer surfaces, improper heat exchanger orientation or poor manifold and distribution system design. Maldistribution is particularly pronounced in parallel flow evaporators due to their specific design with respect to refrigerant routing to each refrigerant circuit. Attempts to eliminate or reduce the effects of this phenomenon on the performance of parallel flow evaporators have been made with little or no success. The primary reasons for such failed attempts have generally been related to complexity and inefficiency of the proposed technique or prohibitively high cost of the solution.

In recent years, parallel flow heat exchangers, and brazed aluminum heat exchangers in particular, have received much attention and interest, not just in the automotive field but also in the heating, ventilation, air conditioning and refrigeration (HVAC&R) industry. The primary reasons for the employment of the parallel flow technology are related to its superior performance, high degree of compactness and enhanced resistance to corrosion. Parallel flow heat exchangers are now utilized in both condenser and evaporator applications for multiple products and system designs and configurations. The evaporator applications, although promising greater benefits, are more challenging and problematic. Refrigerant maldistribution is one of the primary concerns and obstacles for the implementation of this technology in the evaporator applications.

As known, refrigerant maldistribution in parallel flow heat exchanges occurs because of unequal pressure drop inside the channels and in the inlet and outlet manifolds. In the manifolds, the difference in length of refrigerant paths, phase separation and gravity are the primary factors responsible for maldistribution. Inside the heat exchanger channels, variations in the heat transfer rate, airflow distribution, manufacturing tolerances, and gravity are the dominant factors. Furthermore, the recent trend of the heat exchanger performance enhancement promoted miniaturization of its channels (so-called minichannels and microchannels), which in turn negatively impacted refrigerant distribution. Since it is extremely difficult to control all these factors, many of the previous attempts to manage refrigerant distribution, especially in parallel flow evaporators, have failed.

In the refrigerant systems utilizing parallel flow heat exchangers, the inlet and outlet manifolds or headers (these terms will be used interchangeably throughout the text) usually have a conventional cylindrical shape. When the two-phase flow enters the header, the vapor phase is usually separated from the liquid phase. Since both phases flow independently, refrigerant maldistribution tends to occur.

If the two-phase flow enters the inlet manifold at a relatively high velocity, the liquid phase (droplets of liquid) is carried by the momentum of the flow further away from the manifold entrance to the remote portion of the header. Hence, the channels closest to the manifold entrance receive predominantly the vapor phase and the channels remote from the manifold entrance receive mostly the liquid phase. If, on the other hand, the velocity of the two-phase flow entering the manifold is low, there is not enough momentum to carry the liquid phase along the header. As a result, the liquid phase enters the channels closest to the inlet and the vapor phase proceeds to the most remote ones. Also, the liquid and vapor phases in the inlet manifold can be separated by the gravity forces, causing similar maldistribution consequences. In either case, maldistribution phenomenon quickly surfaces and manifests itself in evaporator and overall system performance degradation.

Moreover, maldistribution phenomenon may cause the two-phase (zero superheat) conditions at the exit of some channels, promoting potential flooding at the compressor suction that may quickly translate into the compressor damage.

It is therefore an object of the present invention to provide for a method of overcoming the problems of refrigerant and airflow maldistribution described herein. These objectives are accomplished through the use of fans operated at variable speed or in a pulse width modulation mode, in order to provide improved airflow distribution which results in the elimination and/or reduction in air and refrigerant maldistribution or counter-balances other factors causing refrigerant maldistribution.

A heat exchanger system having the features of the preambles of claims 1 and 16 is disclosed in US-A-6037567. Other heat exchangers having one or more fans are disclosed in US-A-5269367, JP 2004 072977 A, US-A-5813249 and JP 09229 536 A.

### Summary of the Invention

The present invention provides a heat exchanger as claimed in claims 1 and 6.

In accordance with one embodiment of the invention, precise control of the airflow distribution over the heat exchangers is accomplished by utilizing a variable speed fan. The use of a variable speed fan is especially advantageous when as in accordance with the invention two or more fans are utilized to move the air through the heat exchanger. In this case, for example, one fan can be of a variable speed type (controlled by a variable speed drive) while the other fan is of a fixed speed design. By controlling the speed of the variable speed fan, the airflow distribution over the heat exchanger can be controlled in such a fashion that all sections of the heat exchanger receive the adequate and optimal airflow. Other options are possible, where two or more fans dedicated to a particular heat exchanger are of a variable speed design. In this embodiment, the speed of the variable speed fans can be controlled simultaneously or independently to achieve the desire airflow distribution over the heat exchanger surfaces to obtain a desired heat transfer rate. The algorithm for operation of the variable speed fans can be selected during the development testing or can be adjusted in the factory after the unit has been built to account for variations in the unit design as well as various options and features. The final adjustments can also be made in the field, if the air maldistribution over the heat exchanger surfaces is found to be application or installation dependent. This embodiment also allows for component standardization and a reduced number of spare parts. The fan speed control logic can be also adjusted in accordance to the operating conditions to cover a wide spectrum of applications and an entire operating envelope.

In accordance with a second embodiment of the invention, improved airflow distribution in the heat exchangers is accomplished through the use of fans operating in pulse width modulation mode. This can be achieved by rapidly switching fans from high to low speed, if it is a two-speed fan, or simply turning the fan on and off, if it is a single-speed fan design. Also, when the fan is operating at a reduced speed or is turned off, it consumes less power, or no power respectively, thus potentially improving system efficiency. The amount of time the fan is operating at one speed vs. the other speed (or shut off) is often defined by desired system operating conditions. For example, when the system is lightly loaded and little cooling is required, the fans can be operated at lower speed for a longer period of time. Conversely, if the system is highly loaded, then the fans can be operated at the highest speed continuously. The amount of time the fan is running at a high speed vs. operating at a reduced speed (or shut off) can also be adjusted to achieve the most appropriate airflow distribution over heat exchanger surfaces (which is particularly important for parallel flow evaporators that are especially prone to the effects of maldistribution). Additional benefits of running the fans at different speeds can be obtained by controlling the rate of condensate removal from the evaporator heat exchange surface and consequently its latent capacity. As the fan speed is varied, the amount of condensate removal can also be affected accordingly.

Several control strategies can be employed for pulse width modulation of the fans. For example, if a two-speed fan is used, then three operational modes can be selected: full speed, reduced speed and shutoff mode. The frequency at which the fan will cycle from an "on" to an "off" mode is determined by fan reliability and system thermal inertia. For instance, for efficiency and indoor comfort considerations, the cycling should be generally faster than the time constant associated with thermal inertia of the system. Also, the ice formation on the external evaporator surfaces should be avoided (since when the fan is shut off, the saturation suction temperature would drop) by not extending the fan "off" time over the desired threshold. On the other hand, from reliability considerations, fan cycling rate should be made as slow as possible. These tradeoffs are equipment specific and would be generally understood by a refrigerant system designer and addressed at the control logic development stage. In many cases, pulse width modulation cycle is generally between 5 seconds and 1 minute. Further, if the fan has a multiple-speed capability, switching between the multiple speeds can take place.

In cases where both pulse width modulation and variable speed fan techniques are employed to control refrigerant maldistribution, they can be applied in two different ways. In the first approach, a uniform airflow distribution can be provided for the systems with complex designs and different airflow impedances over various portions of the heat exchangers, in order to achieve a uniform heat transfer rate for parallel refrigerant circuits. In the second method, specifically achieved non-uniform airflow distribution may counter-balance or offset other effects influencing refrigerant distribution phenomenon, so refrigerant maldistribution conditions are eliminated and potential compressor flooding (in the evaporator case) is avoided. An adaptive control of fans is also feasible, where a feedback is obtained by a system controller from various temperature and pressure sensors installed in the system. It should be noted that the present invention, while providing most of the benefits to the microchannel type heat exchangers, would also be beneficial to conventional type heat exchangers used in air conditioning, heat pump and refrigeration systems:

### Brief Description of the Drawings

For a further understanding of the objects of the invention, reference will be made to the following detailed description of the invention which is to be read in connection with the accompanying drawing, where:

Fig. 1 is a schematic illustration of a parallel flow heat exchanger in accordance with the prior art.

Fig. 2 is a schematic illustration of a parallel flow heat exchanger illustrating one embodiment of the present invention.

Fig. 3 is an illustrative plot of air and refrigerant distribution along the heat exchanger channels.

Fig. 4 is an illustrative plot of superheat flow through the heat exchanger channels.

Fig. 5 is a plot fan speed versus time for a pulse width modulated fan.

Fig. 6 is a plot of fan power versus fan speed.

### Description of the Preferred Embodiment

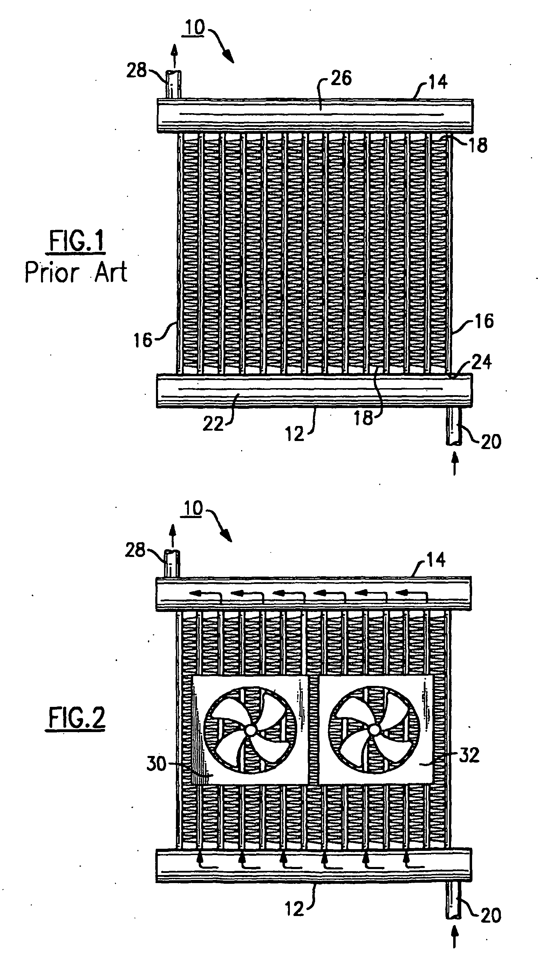

Referring to Fig. 1, a parallel flow (microchannel or minichannel) heat exchanger 10 is shown, as an example, to include an inlet header or manifold 12, an outlet header or manifold 14 and a plurality of parallel disposed channels 16 fluidly interconnecting the inlet manifold 12 to the outlet manifold 14. Generally, the inlet and outlet headers 12 and 14 are cylindrical in shape, and the channels 16 are tubes (or extrusions) of flattened or round cross-section. Channels 16 normally have a plurality of internal and external heat transfer enhancement elements, such as fins. For instance, external fins 18, uniformly disposed therebetween for the enhancement of the heat exchange prowess and structural rigidity are typically furnace-brazed. Channels 16 may have internal heat transfer enhancements and structural elements as well.

In operation, refrigerant flows into the inlet opening 20 and into the internal cavity 22 of the inlet header 12. From the internal cavity 22, the refrigerant, in the form of a liquid, a vapor or a mixture of liquid and vapor enters the channel openings 24 to pass through the channels 16 to the internal cavity 26 of the outlet header 14. From there, the refrigerant flows out of the outlet opening 28 and then to the compressor (not shown). Externally to the channels 16, air is circulated over the channels and associated fins 18 by an air-moving device, such as fan (not shown), so that heat transfer interaction occurs between the air flowing outside the channels and refrigerant in the channels.

According to one embodiment of the invention, as illustrated by Fig. 2, optimum airflow distribution is accomplished by the use of two air-moving devices such as fans 30 and 32 positioned adjacent to the heat exchanger 10, with at least one of the fans provided with a variable speed control. Fans 30 and 32 function in conjunction with each other to provide a predetermined control of airflow distribution to overcome refrigerant maldistribution among the heat exchanger channels 16. Refrigerant maldistribution can be potentially caused by the system design complexities and different airflow impedances over various portions of the heat exchanger 10. In such circumstances, substantially uniform airflow can be provided by varying the fan speed, in order to achieve a uniform heat transfer rate for parallel refrigerant circuits. On the other hand, refrigerant maldistribution can be caused by other factors, such, for example, gravity, manifold design or refrigerant phase separation. To counter-balance or offset these detrimental effects influencing refrigerant distribution, the fan speed can be adjusted to specifically achieve desired non-uniform airflow distribution. By running the fans at different speeds, the airflow distribution can be controlled over various portions of the heat exchanger 10 resulting in an improvement in the refrigerant distribution.

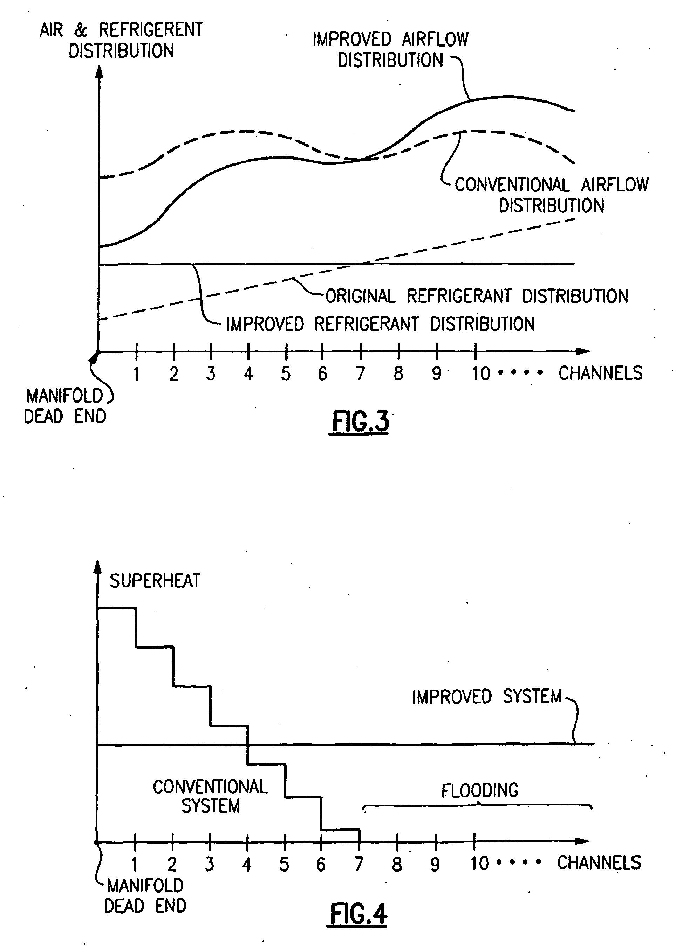

Fig. 3 illustrates comparative plots of airflow distribution and refrigerant distribution for the conventional (prior art) and improved (invention) cases under the circumstances of persisting refrigerant maldistribution caused by some other factors (rather than airflow distribution) outlined above. In this example, the channels 16 positioned closer to the entrance of the inlet manifold 12 receive higher refrigerant flow and channels remote from this entrance receive lower refrigerant flow, so maldistribution between the channels 16 is observed. By increasing speed of fan 32, and possibly decreasing speed of fan 30, predominantly non-uniform airflow distribution can be used to counter-balance or offset original refrigerant maldistribution. As a result of adjusted heat transfer and refrigerant pressure drop rates, uniform refrigerant distribution among the channels 16 is achieved, and the heat exchanger performance is substantially improved. If the heat exchanger 10 is an evaporator, as illustrated in Fig. 4, positive and essentially equal superheat values are obtained for all the channels 16, in the case of improved airflow distribution, and compressor flooding and potential damage are prevented. The fan speed control logic can be utilized to obtain an overall airflow to accommodate the desired operating conditions.

The algorithm for operation of the variable speed fans can be selected during the development testing or can be adjusted in the factory after the unit has been built to account for variations in the unit design as well as various options and features. The final adjustments can also be made in the field, if the air maldistribution over the heat exchanger surfaces is found to be application or installation dependent. This embodiment also allows for component standardization and a reduced number of spare parts. The fan speed control logic can be also adjusted in accordance to the operating conditions to cover a wide spectrum of applications and an entire operating envelope. Obviously, more than two fans can be utilized with any desired number of them having an independent or simultaneous variable speed control.

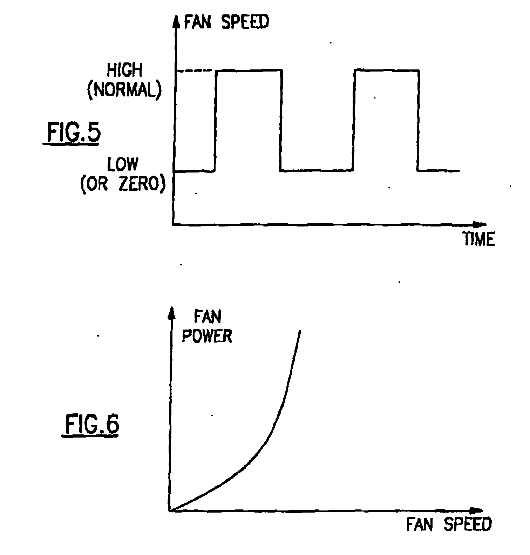

In accordance with a second embodiment of the invention, improved airflow distribution in the heat exchangers can be also accomplished through the use of at least one of the fans 30 and 32 shown in Fig.2 operating in a pulse width modulation mode. This can be achieved by rapidly switching fans from high to low speed, if it is a two-speed fan, or simply turning the fan on and off, if it is a single-speed fan design. Pulse width modulation control of the fan is schematically shown in Fig.5. Further, as shown in Fig. 6, when the fan is operating at a reduced speed or is turned off, it consumes less power, or no power, respectively, thus potentially improving system efficiency. The amount of time the fan is operating at one speed vs. the other speed (or shut off) is often defined by desired system operating conditions. For example, when the system is lightly loaded and little cooling is required, the fans can be operated at lower speed for a longer period of time. Conversely, if the system is highly loaded, then the fans can be operated at the highest speed continuously. The amount of time the fan is running at a high speed vs. operating at a reduced speed (or shut off) can also be adjusted to achieve the most appropriate airflow distribution over heat exchanger surfaces (which is especially important for parallel flow evaporators that are more prone to the effects of maldistribution), similar to the variable speed fan embodiment.

Several control strategies can be employed for pulse width modulation of the fans. For example, if a two-speed fan is used, then three operational modes can be selected: full speed, reduced speed and shutoff mode. The frequency at which the fan will cycle from an "on" to an "off" mode is determined by fan reliability and system thermal inertia. For instance, for efficiency and indoor comfort considerations, the cycling should generally be faster than the thermal inertia time constant of the system. Also, the ice formation on the external evaporator surfaces should be avoided (since when the fan is shut off, the saturation suction temperature would drop) by not extending the fan's "off" time over the desired threshold. On the other hand, from reliability considerations, the fan cycling rate should be made as slow as possible. These tradeoffs are equipment specific and would be generally understood by a refrigerant system designer and addressed at the control logic development stage. In many cases, pulse width modulation cycle is generally between 5 seconds and 1 minute. Further, if a fan has multiple-speed capability, switching between the multiple speeds can take place.

Additional benefits of running the fans at different speeds either by variable speed or pulse width modulation control can be obtained by controlling the rate of condensate removal from the evaporator heat exchange surface and consequently its latent capacity. As the fan speed is varied, the amount of condensate removal can also be affected accordingly. Once again, more than two fans can be utilized with any desired number of them having an independent or simultaneous variable speed or pulse width modulation control.

Further, in both methods of the fan speed adjustment, an adaptive control of fans can be utilized, where a feedback is obtained by a system controller from various temperature and pressure sensors installed in the system.

Since, for a particular application, the various factors that cause the maldistribution of refrigerant to the channels 16 are generally known at the design stage, it has been found it feasible to introduce the design features that will counter-balance or offset these factors in order to eliminate their detrimental effects on the evaporator and overall system performance, as well as potential compressor flooding and damage. For instance, for a particular application it is generally known when the refrigerant flows into the inlet manifold at a high or low velocity and how the maldistribution phenomenon is affected by the velocity values.

While the present invention has been particularly shown and described with reference to the preferred mode as illustrated in the drawings, it will be understood by one skilled in the art that various changes in detail and design may be effected therein without departing from the spirit and scope of the invention as defined by the claims.

## Claims

1. A heat exchanger system comprising:
a heat exchanger (10) including an inlet manifold (12) having an inlet opening (20) for conducting the flow of a fluid into said inlet manifold (12) and a plurality of outlet openings (24) for conducting the flow of fluid from said inlet manifold (12);
a plurality of channels (16) fluidly connected to said plurality of outlet openings (24) for conducting the flow of fluid from said inlet manifold (12); and
an outlet manifold (14) fluidly connected to said plurality of said channels (16) for receiving the flow of fluid therefrom; **characterised by** comprising
at least two air-moving devices (30,32) for moving air over said heat exchanger (10) incorporated in said heat exchanger system; and
wherein at least one of said air-moving devices (30,32) is operated in a pulse width modulation mode and is pulse width modulation controlled at a speed that is different from that of another of said air moving devices (30,32) to promote optimum airflow distribution across the heat exchanger.

2. The heat exchanger system of claim 1 wherein pulse width modulation is used to drive said at least two air-moving devices (30,32) to reduce effects of refrigerant maldistribution.

3. The heat exchanger system of claim 1 wherein pulse width modulation is used to drive said at least two air-moving devices (30,32) to promote uniform airflow distribution across said heat exchanger.

4. The heat exchanger system of claim 1 wherein pulse width modulation is used to drive said at least two air-moving devices (30,32) to adjust system performance characteristics.

5. The heat exchanger system of claim 1 wherein pulse width modulation control logic is predetermined prior to the first startup of said heat exchanger system.

6. The heat exchanger system of claim 1 wherein pulse width modulation control logic is adjusted during operation of said heat exchanger system.

7. The heat exchanger system of claim 1 wherein adaptive pulse width modulation control logic is used based on feedback from at least one sensor.

8. The heat exchanger system of claim 1 wherein said at least one air-moving device (30,32) is a two-speed air-moving device.

9. The heat exchanger system of claim 8 wherein said at least one air-moving device (30,32) is rapidly switched between at least two speed settings.

10. The heat exchanger system of claim 9 wherein the speed settings are selected from the group consisting of high a speed setting, a low speed setting and a zero speed setting.

11. The heat exchanger system of claim 1 wherein said at least one air-moving device (30,32) is a single-speed device and is operated by rapidly turning the fan on and off.

12. The heat exchanger system of claim 1 wherein said at least one air-moving device (30,32) is a multi-speed and is operated by switching between multiple speeds.

13. The heat exchanger system of claim 1 wherein a cycling rate for said air-moving device is selected based on at least one requirement wherein said at least one requirement is selected frown the group of performance requirements, maldistribution and reliability requirements.

14. The heat exchanger system of claim 13 wherein a cycling rate for said air-moving device is between 5 seconds and 1 minute.

15. The heat exchanger system of claim 1 wherein said air-moving device "on" time is selected based on at least one requirement wherein said at least one requirement is selected from the group of performance requirements, maldistribution and reliability requirements.

16. A heat exchanger system comprising:
a heat exchanger (10) including an inlet manifold (12) and having an inlet opening (20) for conducting the flow of a fluid into said inlet manifold (12) and a plurality of outlet openings (24) for conducting the flow of fluid from said inlet manifold (12);
a plurality of channels (16) aligned fluidly connected to said plurality of outlet openings (24) for conducting the flow of fluid from said inlet manifold (12); and
an outlet manifold (14) fluidly connected to said plurality of said channels (16) for receiving the flow of fluid therefrom; **characterised by** comprising:
at least two air-moving devices (30,32) incorporated in said system; and
at least one of said air-moving devices (30,32) is operated at variable speed and controlled with a variable speed control at a speed which is different from the speed of another of said air moving devices (30,32) to promote optimum airflow distribution to combat the effects of at least one of air and refrigerant maldistribution.

17. The heat exchanger system of claim 1 or 16 wherein said inlet manifold (12) extends longitudinally.

18. The heat exchanger system of claim 1 or 16 wherein said plurality of openings (24) conducts the said flow of fluid transversely from said inlet manifold (12).

19. The heat exchanger system of claim 1 or 16 wherein said at least one air-moving device (30,32) is a fan.

20. The heat exchanger system of claim 1 or 16 wherein said heat exchanger (10) is an evaporator.

21. The heat exchanger system of claim 1 or 16 wherein said heat exchanger (10) is a condenser.

22. The heat exchanger system of claim 1 or 16 wherein said heat exchanger (10) is a parallel flow heat exchanger with a plurality of channels (16) aligned in substantially parallel relationship and fluidly connected to said plurality of outlet openings (24) for conducting the flow of fluid from said inlet manifold (12) to said outlet manifold (14).

23. The heat exchanger system of claim 16 wherein at least two variable speed air-moving devices (30,32) are used to reduce effects of refrigerant maldistribution.

24. The heat exchanger system of claim 16 wherein at least two variable speed air-moving devices (30,32) are used to promote uniform airflow distribution across said heat exchanger.

25. The heat exchanger system of claim 16 wherein at least two variable speed air-moving devices (30,32) are used to adjust system performance characteristics.

26. The heat exchanger system of claim 4 or 25 wherein performance characteristics are selected from the group of capacity, efficiency, condensate removal rate, conditioned space comfort, compressor safe operation, and coil frosting.

27. The heat exchanger system of claim 16 wherein variable speed control logic is predetermined prior to the first startup of said heat exchanger system.

28. The heat exchanger system of claim 26 wherein variable speed control logic is adjusted during operation of said heat exchanger system.

29. The heat exchanger system of claim 16 wherein adaptive variable speed control logic is used based on at least one sensor feedback.

30. The heat exchanger system of claim 7 or 12 wherein said at least one sensor is selected from the group consisting of a temperature transducer and a pressure transducer.

31. The heat exchanger system of claim 16 wherein said variable speed for said air-moving device is selected based on at least one requirement wherein said at least one requirement is selected from the group of performance requirements, maldistribution and reliability requirements.

32. The heat exchanger system of claim 1 or 16 wherein said channels (16) of said heat exchanger (10) have round cross-section.

33. The heat exchanger system of claim 1 or 16 wherein said channels (16) of said heat exchanger (10) have flattened cross-section.

## Patentansprüche

1. Wärmetauschersystem, umfassend:
einen Wärmetauscher (10), der einen Einlassverteiler (12) mit einer Einlassöffnung (20) zum Leiten des Stroms eines Fluids in den Einlassverteiler (12) und mehrere Auslassöffnungen (24) zum Leiten des Fluidstroms aus dem Einlassverteiler (12) enthält;
mehrere Kanäle (16), die mit den mehreren Auslassöffnungen (24) strömungsverbunden sind, um den Fluidstrom aus dem Einlassverteiler (12) zu leiten; und
einen Auslassverteiler (14), der mit den mehreren Kanälen (16) strömungsverbunden ist, um den Fluidstrom daraus zu empfangen; **dadurch gekennzeichnet, dass** er Folgendes umfasst:
mindestens zwei Luftbewegungsvorrichtungen (30, 32) zum Bewegen der Luft über den Wärmetauscher (10), der in dem Wärmetauschersystem enthalten ist; und
wobei mindestens eine der Luftbewegungsvorrichtungen (30, 32) in einem Impulsbreitenmodulationsmodus betrieben wird und auf eine Geschwindigkeit impulsbreitenmodulationsgesteuert wird, die sich von der einer anderen der Luftbewegungsvorrichtungen (30, 32) unterscheidet, um eine optimale Luftstromverteilung über den Wärmetauscher zu fördern.

2. Wärmetauschersystem nach Anspruch 1, wobei Impulsbreitenmodulation zum Antrieb der mindestens zwei Luftbewegungsvorrichtungen (30, 32) zur Verringerung der Auswirkungen von Kältemittelfehlverteilung verwendet wird.

3. Wärmetauschersystem nach Anspruch 1, wobei Impulsbreitenmodulation zum Antrieb der mindestens zwei Luftbewegungsvorrichtungen (30, 32) zur Förderung von einheitlicher Luftstromverteilung über den Wärmetauscher verwendet wird.

4. Wärmetauschersystem nach Anspruch 1, wobei Impulsbreitenmodulation zum Antrieb der mindestens zwei Luftbewegungsvorrichtungen (30, 32) zur Einstellung von Systemleistungsmerkmalen verwendet wird.

5. Wärmetauschersystem nach Anspruch 1, wobei eine Impulsbreitenmodulationssteuerlogik vor dem ersten Starten des Wärmetauschersystems vorbestimmt wird.

6. Wärmetauschersystem nach Anspruch 1, wobei eine Impulsbreitenmodulationsteuerlogik während des Betriebs des Wärmetauschersystems eingestellt wird.

7. Wärmetauschersystem nach Anspruch 1, wobei eine adaptive Impulsbreitenmodulationsteuerlogik auf Grundlage von Rückkopplung von mindestens einem Sensor verwendet wird.

8. Wärmetauschersystem nach Anspruch 1, wobei die mindestens eine Luftbewegungsvorrichtung (30, 32) eine Zweigeschwindigkeitsluftbewegungsvorrichtung ist.

9. Wärmetauschersystem nach Anspruch 8, wobei die mindestens eine Luftbewegungsvorrichtung (30, 32) schnell zwischen mindestens zwei Geschwindigkeitseinstellungen geschaltet wird.

10. Wärmetauschersystem nach Anspruch 9, wobei die Geschwindigkeitseinstellungen aus der aus einer Hochgeschwindigkeitseinstellung, Niedriggeschwindigkeitseinstellung und einer Nullgeschwindigkeitseinstellung bestehenden Gruppe ausgewählt sind.

11. Wärmetauschersystem nach Anspruch 1, wobei die mindestens eine Luftbewegungsvorrichtung (30, 32) eine Einzelgeschwindigkeitsvorrichtung ist und durch schnelles Ein- und Ausschalten des Lüfters betätigt wird.

12. Wärmetauschersystem nach Anspruch 1, wobei die mindestens eine Luftbewegungsvorrichtung (30, 32) eine Mehrgeschwindigkeitsvorrichtung ist und durch Schalten zwischen mehreren Geschwindigkeiten betätigt wird.

13. Wärmetauschersystem nach Anspruch 1, wobei eine Taktrate für die Luftbewegungsvorrichtung auf Grundlage mindestens einer Anforderung ausgewählt ist, wobei die mindestens eine Anforderung aus der aus Leistungsanforderungen, Fehlverteilung und Zuverlässigkeitsanforderungen bestehenden Gruppe ausgewählt ist.

14. Wärmetauschersystem nach Anspruch 13, wobei eine Taktrate für die Luftbewegungsvorrichtung zwischen 5 Sekunden und 1 Minute liegt.

15. Wärmetauschersystem nach Anspruch 1, wobei die Einschaltzeit der Luftbewegungsvorrichtung auf Grundlage mindestens einer Anforderung ausgewählt ist, wobei die mindestens eine Anforderung aus der aus Leistungsanforderungen, Fehlverteilung und Zuverlässigkeitsanforderungen bestehenden Gruppe ausgewählt ist.

16. Wärmetauschersystem, das Folgendes umfasst:
einen Wärmetauscher (10), der einen Einlassverteiler (12) mit einer Einlassöffnung (20) zum Leiten des Stroms eines Fluids in den Einlassverteiler (12) und mehrere Auslassöffnungen (24) zum Leiten des Fluidstroms aus dem Einlassverteiler (12) enthält;
mehrere Kanäle (16), die strömungsverbunden auf die mehrere Auslassöffnungen (24) ausgerichtet sind, um den Fluidstrom aus dem Einlassverteiler (12) zu leiten; und
einen Auslassverteiler (14), der mit den mehreren Kanälen (16) strömungsverbunden ist, um den Fluidstrom daraus zu empfangen; **dadurch gekennzeichnet, dass** er Folgendes umfasst:
mindestens zwei Luftbewegungsvorrichtungen (30, 32), die in dem System enthalten sind; und
wobei mindestens eine der Luftbewegungsvorrichtungen (30, 32) mit einer verstellbaren Geschwindigkeit betrieben und mit einer Geschwindigkeitverstellsteuerung auf eine Geschwindigkeit eingestellt wird, die sich von der Geschwindigkeit der anderen der Luftbewegungsvorrichtungen (30, 32) unterscheidet, um eine optimale Luftstromverteilung zur Bekämpfung der Auswirkungen von Luft- und/oder Kältemittelfehlverteilung zu fördern.

17. Wärmetauschersystem nach Anspruch 1 oder 16, wobei sich der Einlassverteiler (12) in Längsrichtung erstreckt.

18. Wärmetauschersystem nach Anspruch 1 oder 16, wobei die mehreren Öffnungen (24) den Fluidstrom in Querrichtung von dem Einlassverteiler (12) leiten.

19. Wärmetauschersystem nach Anspruch 1 oder 16, wobei die mindestens eine Luftbewegungsvorrichtung (30, 32) ein Lüfter ist.

20. Wärmetauschersystem nach Anspruch 1 oder 16, wobei der Wärmetauscher (10) ein Verdampfer ist.

21. Wärmetauschersystem nach Anspruch 1 oder 16, wobei der Wärmetauscher (10) ein Kondensator ist.

22. Wärmetauschersystem nach Anspruch 1 oder 16, wobei der Wärmetauscher (10) ein Parallelstromwärmetauscher mit mehreren Kanälen (16) ist, die in im Wesentlichen paralleler Beziehung ausgerichtet und mit den mehreren Auslassöffnungen (24) strömungsverbunden sind, um den Fluidstrom aus dem Einlassverteiler (12) zu dem Auslassverteiler (14) zu leiten.

23. Wärmetauschersystem nach Anspruch 16, wobei mindestens zwei Luftbewegungsvorrichtungen (30, 32) mit verstellbarer Geschwindigkeit verwendet werden, um Auswirkungen von Kältemittelfehlverteilung zu reduzieren

24. Wärmetauschersystem nach Anspruch 16, wobei mindestens zwei Luftbewegungsvorrichtungen (30, 32) mit verstellbarer Geschwindigkeit verwendet werden, um eine gleichförmige Luftstromverteilung über den Wärmetauscher zu fördern.

25. Wärmetauschersystem nach Anspruch 16, wobei mindestens zwei Luftbewegungsvorrichtungen (30, 32) mit verstellbarer Geschwindigkeit verwendet werden, um Systemleistungsmerkmale einzustellen.

26. Wärmetauschersystem nach Anspruch 4 oder 25, wobei Leistungsmerkmale aus der aus Kapazität, Wirkungsgrad, Kondensatentfernungsrate, Raumklimatisierungskomfort, Kompressorsicherheitsbetrieb und Gefrieren der Rohrschlange ausgewählt sind.

27. Wärmetauschersystem nach Anspruch 16, wobei eine Geschwindigkeitsverstellsteuerlogik vor dem ersten Starten des Wärmetauschersystems vorbestimmt wird.

28. Wärmetauschersystem nach Anspruch 26, wobei eine Geschwindigkeitsverstellsteuerlogik während des Betriebs des Wärmetauschersystems eingestellt wird.

29. Wärmetauschersystem nach Anspruch 16, wobei eine adaptive Geschwindigkeitsverstellsteuerlogik auf Grundlage von Rückkopplung von mindestens einem Sensor verwendet wird.

30. Wärmetauschersystem nach Anspruch 7 oder 12, wobei der mindestens eine Sensor aus der aus einem Temperaturwandler und einem Druckwandler bestehenden Gruppe ausgewählt ist.

31. Wärmetauschersystem nach Anspruch 16, wobei die verstellbare Geschwindigkeit für die Luftbewegungsvorrichtung auf Grundlage mindestens einer Anforderung ausgewählt ist, wobei die mindestens eine Anforderung aus der aus Leistungsanforderungen, Fehlverteilung und Zuverlässigkeitsanforderungen bestehenden Gruppe ausgewählt ist.

32. Wärmetauschersystem nach Anspruch 1 oder 16, wobei die Kanäle (16) des Wärmetauschers (10) einen runden Querschnitt aufweisen.

33. Wärmetauschersystem nach Anspruch 1 oder 16, wobei die Kanäle (16) des Wärmetauschers (10) einen abgeflachten Querschnitt aufweisen.

## Revendications

1. Système échangeur de chaleur, comprenant :
un échangeur de chaleur (10) comportant un collecteur d'admission (12) possédant une ouverture d'admission (20) permettant d'introduire l'écoulement d'un fluide dans ledit collecteur d'admission (12) et une pluralité d'ouvertures d'échappement (24) permettant d'évacuer l'écoulement de fluide dudit collecteur d'admission (12) ;
une pluralité de canaux (16) en communication fluidique avec ladite pluralité d'ouvertures d'échappement (24) permettant d'évacuer l'écoulement de fluide dudit collecteur d'admission (12) ; et
un collecteur d'échappement (14) en communication fluidique avec ladite pluralité de canaux (16) permettant d'en recevoir l'écoulement de fluide ;
**caractérisé en ce qu'**il comprend :
au moins deux dispositifs aérauliques (30, 32) permettant de faire passer de l'air sur ledit échangeur de chaleur (10), incorporés audit système échangeur de chaleur ; et
au moins un desdits dispositifs aérauliques (30, 32) étant exploité en mode de modulation d'impulsions en largeur et commandé par modulation d'impulsions en largeur à une vitesse différente de celle d'un autre desdits dispositifs aérauliques (30, 32) dans le but de favoriser une répartition optimale du flux d'air sur l'ensemble de l'échangeur de chaleur.

2. Système échangeur de chaleur selon la revendication 1, la modulation d'impulsions en largeur étant utilisée pour amener lesdits au moins deux dispositifs aérauliques (30, 32) à réduire les effets d'une mauvaise répartition de fluide frigorigène.

3. Système échangeur de chaleur selon la revendication 1, la modulation d'impulsions en largeur étant utilisée pour amener lesdits au moins deux dispositifs aérauliques (30, 32) à favoriser une répartition uniforme du flux d'air sur l'ensemble dudit échangeur de chaleur.

4. Système échangeur de chaleur selon la revendication 1, la modulation d'impulsions en largeur étant utilisée pour amener lesdits au moins deux dispositifs aérauliques (30, 32) à ajuster des caractéristiques de fonctionnement du système.

5. Système échangeur de chaleur selon la revendication 1, une logique de commande par modulation d'impulsions en largeur étant prédéfinie avant la première mise en route dudit système échangeur de chaleur.

6. Système échangeur de chaleur selon la revendication 1, une logique de commande par modulation d'impulsions en largeur étant ajustée au cours de l'exploitation dudit système échangeur de chaleur.

7. Système échangeur de chaleur selon la revendication 1, une logique de commande adaptative par modulation d'impulsions en largeur étant utilisée sur la base de la rétroaction d'au moins un capteur.

8. Système échangeur de chaleur selon la revendication 1, ledit au moins un dispositif aéraulique (30, 32) étant un dispositif aéraulique à deux vitesses.

9. Système échangeur de chaleur selon la revendication 8, ledit au moins un dispositif aéraulique (30, 32) faisant l'objet d'une commutation rapide entre au moins deux positions de réglage de vitesse.

10. Système échangeur de chaleur selon la revendication 9, les positions de réglage de vitesse étant choisies dans le groupe comprenant une position de réglage de vitesse rapide, une position de réglage de vitesse lente et une position de réglage de vitesse nulle.

11. Système échangeur de chaleur selon la revendication 1, ledit au moins un dispositif aéraulique (30, 32) étant un dispositif à une seule vitesse et étant exploité par commutation marche/arrêt rapide du ventilateur.

12. Système échangeur de chaleur selon la revendication 1, ledit au moins un dispositif aéraulique (30, 32) étant un dispositif à plusieurs vitesses et étant exploité par commutation entre plusieurs vitesses.

13. Système échangeur de chaleur selon la revendication 1, une durée de cycle de fonctionnement dudit dispositif aéraulique étant choisie en fonction d'au moins un critère, ledit au moins un critère étant choisi dans le groupe comprenant un critère lié à la qualité de fonctionnement, un critère lié à la répartition et un critère lié à la fiabilité.

14. Système échangeur de chaleur selon la revendication 13, la durée de cycle de fonctionnement dudit dispositif aéraulique étant comprise entre 5 secondes et 1 minute.

15. Système échangeur de chaleur selon la revendication 1, la durée de marche dudit dispositif aéraulique étant choisie en fonction d'au moins un critère, ledit au moins un critère étant choisi dans le groupe comprenant un critère lié à la qualité de fonctionnement, un critère lié à la répartition et un critère lié à la fiabilité.

16. Système échangeur de chaleur, comprenant :
un échangeur de chaleur (10) comportant un collecteur d'admission (12) possédant une ouverture d'admission (20) permettant d'introduire l'écoulement d'un fluide dans ledit collecteur d'admission (12) et une pluralité d'ouvertures d'échappement (24) permettant d'évacuer l'écoulement de fluide dudit collecteur d'admission (12) ;
une pluralité de canaux (16) alignés en communication fluidique avec ladite pluralité d'ouvertures d'échappement (24) permettant d'évacuer l'écoulement de fluide dudit collecteur d'admission (12) ; et
un collecteur d'échappement (14) en communication fluidique avec ladite pluralité de canaux (16) permettant d'en recevoir l'écoulement de fluide ;
**caractérisé en ce qu'**il comprend :
au moins deux dispositifs aérauliques (30, 32) incorporés audit système ; et
au moins un desdits dispositifs aérauliques (30, 32) étant exploité à vitesse variable et commandé par vitesse variable à une vitesse différente de celle d'un autre desdits dispositifs aérauliques (30, 32) dans le but de favoriser une répartition optimale du flux d'air pour lutter contre les effets d'une mauvaise répartition d'air et/ou de fluide frigorigène.

17. Système échangeur de chaleur selon la revendication 1 ou 16, ledit collecteur d'admission (12) s'étendant longitudinalement.

18. Système échangeur de chaleur selon la revendication 1 ou 16, ladite pluralité d'ouvertures (24) évacuant transversalement ledit écoulement de fluide dudit collecteur d'admission (12).

19. Système échangeur de chaleur selon la revendication 1 ou 16, ledit au moins un dispositif aéraulique (30, 32) étant un ventilateur.

20. Système échangeur de chaleur selon la revendication 1 ou 16, ledit échangeur de chaleur (10) étant un évaporateur.

21. Système échangeur de chaleur selon la revendication 1 ou 16, ledit échangeur de chaleur (10) étant un condenseur.

22. Système échangeur de chaleur selon la revendication 1 ou 16, ledit échangeur de chaleur (10) étant un échangeur de chaleur à écoulement parallèle comportant une pluralité de canaux (16) alignés sensiblement parallèlement et en communication fluidique avec ladite pluralité d'ouvertures d'échappement (24) permettant d'acheminer l'écoulement de fluide dudit collecteur d'admission (12) audit collecteur d'échappement (14).

23. Système échangeur de chaleur selon la revendication 16, au moins deux dispositifs aérauliques (30, 32) à vitesse variable étant utilisés dans le but de réduire les effets d'une mauvaise répartition de fluide frigorigène.

24. Système échangeur de chaleur selon la revendication 16, au moins deux dispositifs aérauliques (30, 32) à vitesse variable étant utilisés dans le but de favoriser une répartition uniforme du flux d'air sur l'ensemble dudit échangeur de chaleur.

25. Système échangeur de chaleur selon la revendication 16, au moins deux dispositifs aérauliques (30, 32) à vitesse variable étant utilisés dans le but d'ajuster des caractéristiques de fonctionnement du système.

26. Système échangeur de chaleur selon la revendication 4 ou 25, les caractéristiques de fonctionnement étant choisies dans le groupe comprenant la capacité, le rendement, le taux d'élimination de condensat, le confort dans l'espace conditionné, l'exploitation en toute sécurité du compresseur, et le givrage du serpentin.

27. Système échangeur de chaleur selon la revendication 16, une logique de commande par vitesse variable étant prédéfinie avant la première mise en route dudit système échangeur de chaleur.

28. Système échangeur de chaleur selon la revendication 26, une logique de commande par vitesse variable étant ajustée au cours de l'exploitation dudit système échangeur de chaleur.

29. Système échangeur de chaleur selon la revendication 16, une logique de commande adaptative par vitesse variable étant utilisée sur la base d'une rétroaction d'au moins un capteur.

30. Système échangeur de chaleur selon la revendication 7 ou 12, ledit au moins un capteur étant choisi dans le groupe comprenant un transducteur de température et un transducteur de pression.

31. Système échangeur de chaleur selon la revendication 16, ladite vitesse variable dudit dispositif aéraulique étant choisie en fonction d'au moins un critère, ledit au moins un critère étant choisi dans le groupe comprenant un critère lié à la qualité de fonctionnement, un critère lié à la répartition et un critère lié à la fiabilité.

32. Système échangeur de chaleur selon la revendication 1 ou 16, ladite pluralité de canaux (16) dudit échangeur de chaleur (10) possédant une section transversale arrondie.

33. Système échangeur de chaleur selon la revendication 1 ou 16, ladite pluralité de canaux (16) dudit échangeur de chaleur (10) possédant une section transversale aplatie.
